# EUROPÄISCHE PATENTSCHRIFT

(11) **EP 1 316 230 B1**
(45) Veröffentlichungstag und Bekanntmachung des Hinweises auf die Patenterteilung: **28.07.2004**
(21) Anmeldenummer: 01967047.0
(22) Anmeldetag: 30.08.2001
(51) Int. Cl.: H04Q 7/22, H04L 12/66

(54) **GENERISCHE WLAN-ARCHITEKTUR**
GENERIC WLAN ARCHITECTURE
ARCHITECTURE GENERIQUE D'UN RESEAU LOCAL SANS FIL (WLAN)

(30) Priorität: 01.09.2000 DE 10043203
(43) Veröffentlichungstag der Anmeldung: 04.06.2003
(73) Patentinhaber: SIEMENS AKTIENGESELLSCHAFT, 80333 München (DE)
(72) Erfinder: LUPPER, Alfred, 86482 Aystetten (DE); MORPER, Hans-Jochen, 85253 Erdweg (DE); RIEGEL, Maximilian, 90409 Nürnberg (DE)
(86) Internationale Anmeldenummer: PCT/DE2001/003331
(87) Internationale Veröffentlichungsnummer: WO 2002/019617

(56) Entgegenhaltungen:
- EP-A- 0 766 427

## Beschreibung

Die Erfindung betrifft ein Verfahren zum Durchführen eines Datenaustauschs in einem auf einer ersten Technologie aufbauenden Netz mit den oberbegrifflichen Merkmalen des Anspruchs 1 bzw. eine Netzeinrichtung mit den oberbegrifflichen Merkmalen des Anspruchs 20.

In leitungsgebundenen Kommunikationssystemen findet eine Kommunikation zwischen miteinander verdrahteten Teilnehmerstationen statt, wobei zwischen diese in der Regel Vermittlungsstellen zwischengeschaltet sind.

In Funk-Kommunikationssystemen, beispielsweise dem europäischen Mobilfunksystem der zweiten Generation GSM (Global System for Mobile Communications), werden Informationen wie beispielsweise Sprache, Bildinformation oder andere Daten mit Hilfe von elektromagnetischen Wellen über eine Funkschnittstelle übertragen. Die Funkschnittstelle bezieht sich auf eine Verbindung zwischen einer Basisstation und einer Vielzahl von Teilnehmerstationen, wobei die Teilnehmerstationen beispielsweise Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen. Für die dritte Mobilfunkgeneration UMTS sind zwei Modi vorgesehen, wobei ein Modus einen FDD-Betrieb (Frequency Division Duplex) und der andere Modus einen TDD-Betrieb (Time Division Duplex) bezeichnet. Diese Modi finden ihre Anwendung in unterschiedlichen Frequenzbändern, wobei beide Modi ein kodegeteiltes sogenanntes CDMA-Teilnehmer-Separierungsverfahren (Code Division Multiple Access) unterstützen.

Im Falle eines Datenzugangs, vor allem in leitungsgebundenen Systemen, erfolgt die Steuerung von Verbindungen zwischen einer Teilnehmerstation und einem Zugangsnetz zumeist über ein Punkt-zu-Punkt-Protokoll (PPP). Beim Aufbau einer Verbindung findet eine Authentisierung des Teilnehmers bzw. der Verbindungs-aufbauenden Teilnehmer-Station statt, was u.a. Grundlage für eine zentrale Abrechnung von anfallenden Gebühren sein kann. Zu Zwecken der Authentisierung ist das RADIUS-Protokoll (RADIUS: Remote Authentication Dial In User Service) bekannt.

Bieten derartige Kommunikationssysteme den Teilnehmerstationen, z.B. einem Computer bzw. Host, einen Netzzugang für Datenübertragung, z.B. für Internetdienste, an, so erfolgt bei der Installation einer Teilnehmerstation eine Konfiguration, bei der in der Teilnehmerstation alle für den Datenzugang notwendigen Einstellungen, insbesondere IP-Adressen (IP: Internet Protokoll) abgespeichert werden. Diese erlauben es der Teilnehmerstation, respektive dem Teilnehmer, unterstützende Dienste, die für den Ablauf des gewünschten Datendienstes, z.B. Internet-Zugang, unumgänglich sind, sowie Netzkomponenten, auf denen diese ablaufen, zu kontaktieren. Zu diesen Adressen gehören neben z.B. der IP-Adresse eines HTTP-Servers, der den bequemen Aufruf einer Internetseite "per Mausklick" ermöglicht, u.a. die Adresse eines DNS (Domain Name Server), welcher die zu einem Teilnehmer gehörende IP-Adresse ermittelt, sowie die Adresse eines SMTP-Servers (Simple Mail Transfer Protocol), welcher zur Übermittlung elektronischer Nachrichten, bekannt als eMail, notwendig ist.

Neben den vorstehend aufgeführten Kommunikationssystemen gibt es Datennetze, die in der Regel lokal aufgebaut sind und zur allgemeinen Verbindung von Datenstationen konzipiert sind, die nachfolgend lediglich zur Unterscheidung von den vorstehend bezeichneten Teilnehmerstationen und ohne Beschränkungen als Host bezeichnet werden. Zwei Host-Rechner können direkt oder über Hubs und Brücken miteinander und mit Netzeinrichtungen, wie einem Zugriffsserver verbunden sein. Der Transport von Datenpaketen zwischen einem Host und einer anderen Netzeinrichtung erfolgt zumeist über IP (Internet-Protokoll).

Beim Anschluß eines Host an ein Netz, beispielsweise ein lokales Datennetz (LAN), wird dem Host von einem Verbindungs- bzw. Zugriffsserver mittels z.B. des sogenannten dynamischen Host-Konfigurierungs-Protokolls (DHCP) eine IP-Adresse vergeben, unter welcher der Host im Netz eindeutig identifizierbar und ansprechbar ist. Außerdem werden dem Host dabei Adressen von für ihn wichtigen Hilfsdiensten bzw. von Netzkomponenten, auf denen diese Dienste ausgeführt werden, in diesem Netz mitgeteilt.

Ein Host ist üblicherweise drahtgebunden an ein lokales Netz angeschlossen, wobei das letzte Teilstück eines drahtbasierten Zugangs in neueren Netzen drahtlos über Funk erfolgen kann. Ein lokales Netz, das den drahtlosen Anschluß von Hosts unterstützt, wird allgemein als W-LAN (Wireless Local Area Network) bezeichnet.

Beim Aufbau einer Verbindung finden eine Authentisierung und Autorisierung des Verbindungs-aufbauenden Host, wenn überhaupt, dann in einem Authentisierungs- und Autorisierungs-Server statt, der optional auch eine zentrale Abrechnung von anfallenden Gebühren ermöglichen kann (AAA-Server).

Die vorstehend beschriebenen Kommunikationssysteme und Netze unterscheiden sich somit hinsichtlich vieler Merkmale, so dass eine direkte Verbindung von Stationen des einen Systems mit denen des anderen Systems derzeit nicht möglich ist.

Einer Teilnehmerstation eines Tele-Kommunikationssystems müssen bei der Installation für einen IP-Zugang die für einen Verbindungsaufbau erforderlichen IP-Adressen im voraus vor einem ersten Anschluss bzw. Verbindungsaufbau mit einer entsprechenden Netz-Schnittstelle über eine Software-Installation mitgeteilt werden. Dahingegen erfolgt bei einem lokalen Datennetz die Zuweisung aller erforderlichen IP-Adressen direkt automatisch bei jeder neuen Verbindung eines Host mit einem Datennetz. Eine Teilnehmerstation und ein Host sind somit keine zu der anderen Netztechnologie kompatible Einrichtungen.

Eine weitere beispielhafte Inkompatibilität zeigt sich z.B. in der Art des Verbindungsaufbaus. Einerseits wird zwischen Teilnehmerstationen und den in Tele-Kommunikationssystemen befindlichen netzseitigen Datenendeinrichtungen, bekannt als RAS (Remote Access Server), ein Punkt-zu-Punkt-Verbindungs-Protokoll (PPP bzw. Point-to-Point-Protocol) verwendet, welches zwischen den eigentlichen, netzspezifischen Transport-Protokollschichten und dem IP zur Verbindungssteuerung eingesetzt wird. Andererseits ist dahingegen in lokalen Netzen, bekannt u.a. als LAN (Local Area Network), diese zusätzliche Verbindungssteuerung nicht erforderlich, so dass Datenpakete, sogenannte IP-Pakete, direkt auf der zugrundeliegenden Transportschicht übermittelt werden können. Die Transportschicht wird vorteilhafterweise durch Ethernet bereitgestellt.

Insbesondere in einem Funk-Tele-Kommunikationssystem müssen ferner dessen Besucherregister (VLR - Visitor Location Register) und das Teilnehmer-Heimatregister (HLR - Home Location Register) stets über den momentanen Aufenthaltsort eines aktiven Teilnehmers und dessen Dienste-Zugriffs-Berechtigungen informiert sein. Ansonsten wäre ein Verbindungsaufbau zu diesem Teilnehmer hin von einer anderen Teilnehmerstation aus nicht einleitbar. Im Gegensatz dazu müssen vergleichbare Funktionen eines Besucherregisters in einem lokalen Datennetz nicht oder nur bedingt verfügbar sein, da die Netzkunden (net client) reine Abrufdienste darstellen, die beispielsweise ein Triplett in das Netz senden. Ein Triplett besteht aus zwei Rufwerten (challenge values) und einem Wert für eine erwartete Antwort (response value).

Jede der Kommunikationstechnologien hat ihre spezifischen Vor- und Nachteile. Beispielsweise ist
- ein verdrahteter Zugriff einer Station auf das entsprechende Tele-Kommunikationssystem schnell aber stationär, d.h. an einen Ort gebunden,
- ein Punkt-zu-Punkt-Zugriff ist zwar verbindungs-orientiert, aber nicht frei konfigurierbar,
- ein zellularer Zugriff (Funk-Tele-Kommunikationssystem) in hohem Maße mobil, aber hinsichtlich der Übertragungs-Bandbreite beschränkt,
- ein Zugriff auf ein lokales Netz (LAN) selbst- bzw. autokonfigurierbar, aber unsicher, da eine Authentisierung in der Regel entfällt.

Bei verschiedenen Technologien gibt es Ansätze oder Überlegungen, Vorteile anderer Technologien in die eigene zu integrieren:
- Bei IETF (Internet Engineering Task Force) werden Erweiterungen zu bestehenden Protokollen und/oder neue Protokolle geplant,
- bei UMTS sollen die Übertragung von Sprache (voice) und verschiedene Datendienste bereitgestellt werden,
- bei GSM wird ein spezieller Paketdatendienst (GPRS: General Paket Radio Service) eingeführt, ....
Die Integration von Aspekten anderer Technologien erfolgt dabei jedoch nachteilhafterweise stets durch eine spezielle und aufwendige Erweiterung der eigenen Technologie.

Die derzeit verfügbaren Datennetz-Technologien ermöglichen es einem Teilnehmer, sich mit seinem Notebook mit einer Funk-Datennetzkarte z.B. an einem Flughafen in ein dort zugreifbares fremdes Datennetz mit einer Funkschnittstelle einzubuchen. Dies ist möglich, da bei offen konzipierten Datennetzen keine Authorisierungs-Überprüfung durchgeführt wird. Der Netzbetreiber kann jedoch nur mit großem programmiertechnischen Aufwand verhindern, dass der fremde Teilnehmer auf bestimmte Dateien oder Programme im Datennetz zugreifen kann.

Die Programmierung muss dabei in verschiedenen Einrichtungen des Datennetzes und in den verschiedenen vor fremden Zugriffen zu schützenden Hosts erfolgen. Ein Schutz ist insbesondere dann nur bedingt möglich, wenn dem Host oder dem Teilnehmer Netz-interne IP-Adressen bekannt sind.

In der EP 0766427 A2 wird ein Bürokommunikationssystem beschrieben, bei dem Daten zwischen einem lokalen Netz (LAN) und einem GSM-Netz ausgetauscht werden. Hierzu besitzt das lokale Netz eine Schnittstelle (gateway computer), die die Daten des lokalen Netzes in ein Datenformat des GSM-Netzes konvertiert und umgekehrt.

Die Aufgabe der Erfindung besteht darin, die verschiedenen Systeme, insbesondere ein Telekommunikationssystem und ein lokales Datennetz, derart zueinander kompatibel zu machen, dass Zugriffe einer Station eines ersten Systems auf Stationen eines zweiten Systems mit minimalem baulichen und/oder programmiertechnischem Aufwand möglich sind.

Diese Aufgabe wird durch ein Verfahren mit den Merkmalen des Patentanspruchs 1 bzw. eine Netzeinrichtung gemäß den Merkmalen des Patentanspruchs 20 gelöst. Vorteilhafte Ausgestaltungen sind Gegenstand von abhängigen Ansprüchen.

Durch einen derartigen Aufbau können Stationen des einen Systems mit Stationen des anderen Systems mit nur minimalem baulichen und/oder programmiertechnischen Aufwand miteinander kommunizieren. Die verschiedenen Technologien können so kombiniert werden, dass jeweils deren vorteilhafte Eigenschaften von Einrichtungen anderer Technologien ausgenutzt werden können. Insbesondere können z.B. Authentisierungs- und Autorisierungs-Funktionen aus einem zellularen Funk-Tele-Kommunikationsnetz für ein Datennetz verfügbar gemacht werden, so dass z.B. eine Authentisierung und eine Autorisierung eines im Datennetz fremden Teilnehmers möglich werden.

Insbesondere können erforderliche Anpassungen in System- bzw. Netzstationen vorgenommen werden, so dass an den Endstationen, also den Teilnehmerstationen bzw. Hosts, welche die Massengüter eines Kommunikations- oder Datennetzes sind, keine Veränderungen vorzunehmen sind.

Im Idealfall entsteht somit eine generische Gesamt-Architektur, welche die beste Breite an Vorteilen verschiedenster Technologien bietet. Es handelt sich somit nicht nur um eine einfache Weiterentwicklung einer einzelnen Technologie, sondern um ein einzigartiges Gesamtkonzept, das problemlos erweiterbar ist. Beispielsweise kann die Gesamt-Architektur die Vorteile aufweisen,
- dass sie einen einfachen, leichten Zugriff und die Autokonfigurierbarkeit eines lokalen Daten-Netzes (LAN) bietet,
- dass sie PP-Protokoll- und DHC-Protokoll-Zugriffs-Philosophien kombiniert bzw. verwendet,
- dass sie die geeignetste Mobilitäts-Funktionalität für einen mobilen Datenzugriff ermöglicht,
- dass sie Breitband-Datenzugriff für Dienste mit hohen Anforderungen (best effort services) bietet,
- dass sie eine hohe Sicherheit gewährleistet,
- dass sie eine Berechnung von beanspruchten Leistungen eines Diensteanbieters und deren Abrechnung (billing and accounting) ermöglicht,
- dass sie ein Organisations- und Wartungszentrum im Datennetz bereitstellt,
- dass sie den Anschluss an zellulare Netze, insbesondere Funk-Tele-Kommunikationssysteme bietet,
- dass sie sehr kostengünstig umsetzbar ist,
- dass sie mit minimalem, plattform-unspezifischem Programmieraufwand alle denkbaren Host-Plattformen (PC/Laptop/Palm®Top/Windows®/Linux®/OS2®/MAC OS®,...) unterstützt,
- dass sie standardisierte Transport- und Zugriffstechnologien vorsieht.

Ausführungsbeispiele werden nachfolgend anhand der Zeichnung näher erläutert. Es zeigen:
- Fig. 1: in der linken unteren Bildhälfte ein herkömmliches verdrahtetes Tele-Kommunikationssystem, in der linken oberen Bildhälfte ein Funk-Tele-Kommunikationssystem und in der rechten Hälfte ein lokales Datennetz,
- Fig. 2: einen schematischen Aufbau eines Netzes mit einem tabellarischen Überblick über Protokoll-Funktionen einzelner Einrichtungen,
- Fig. 3: ein erstes konkretes Ausführungsbeispiel,
- Fig. 4: ein zweites konkretes Ausführungsbeispiel,
- Fig. 5: einen beispielhaften Verfahrensablauf zur Authentisierung eines Host in einem Datennetz mit Hilfe von Daten eines insbesondere technologiefremden anderen Netzes.

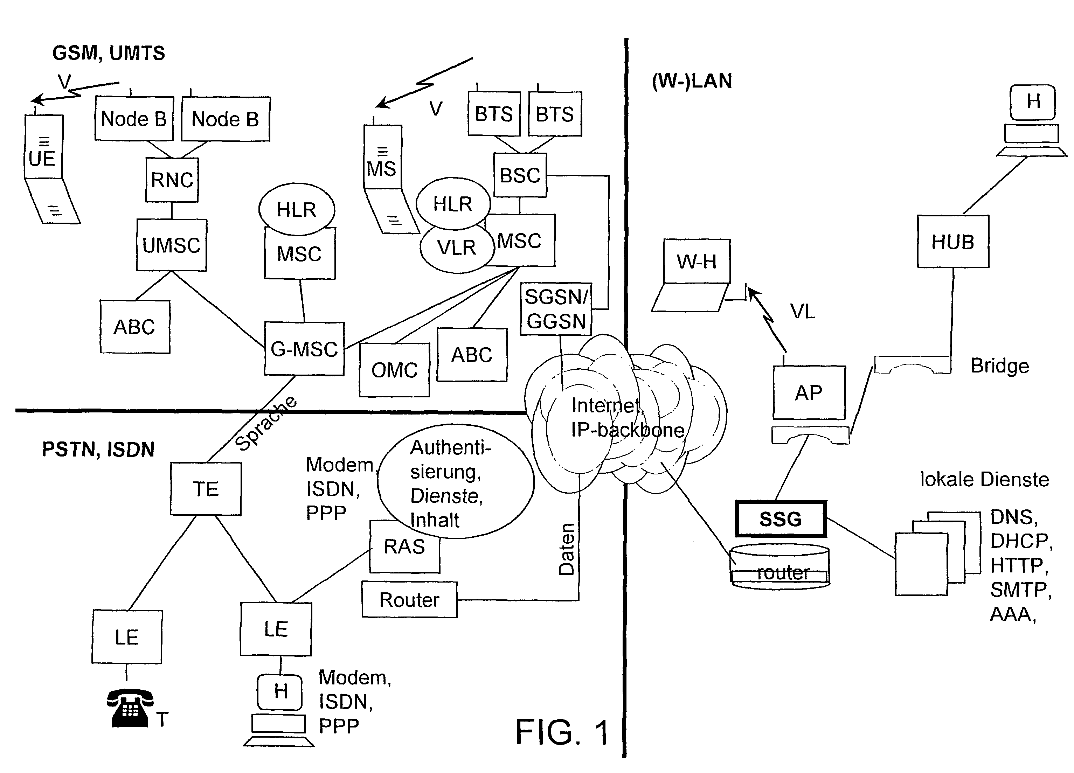

Wie aus Fig. 1, links unten ersichtlich, weist ein Tele-Kommunikationssystem bzw. -netz vorzugsweise drahtgebundene Teilnehmereinrichtungen, beispielsweise Telefone T und über eine Modemeinrichtung angeschlossene Computer bzw. Host H auf. Das Tele-Kommunikationssystem kann beispielsweise ein diensteintegrierendes digitales Nachrichtennetz ISDN (Integrated Services Digital Network), ein herkömmliches öffentliches Fernsprechnetz PSTN (Public Switched Telephone Network) oder ein digitales xDSL-System (DSL: Digital Subscriber Line) sein.

Lokale Ortsämter LE (Local Exchange), mit denen die einzelnen Teilnehmereinrichtungen T bzw. H verbunden sind, können untereinander und mit weiteren Netzeinrichtungen, z.B. einem Transitamt TE (Transit Exchange) verbunden sein, die zum Übergang bzw. der Kommunikation mit anderen Netzen dienen.

Insbesondere für den Anschluß von Hosts an ein Datennetz über ein Transportnetz (ISDN) weist das Tele-Kommunikationssystem PSTN/ISDN einen Server für einen entfernten Datenzugriff auf, der nachfolgend als Fernzugriffs-Server RAS (Remote Access Server) bezeichnet wird. Der Fernzugriffs-Server RAS ist bei den derzeitigen Systemen für den Aufbau von Verbindungen zu dem Teilnehmer-Datenendeinrichtungen, insbesondere Hosts H, erforderlich und arbeitet mit einem Punkt-zu-Punkt-Protokoll PPP, welches üblicherweise den Anforderungen an das Internet-Protokoll IP genügt. Die Authentisierung einer Teilnehmerstation erfolgt üblicherweise über den Dienst RADIUS (Remote Authentication Dial In User Service). Außerdem weist der Fernzugriffs-Server RAS in der Regel Modembänke für den netzseitigen und teilnehmerseitigen Datentransport und Router für die Verbindung zum IP-basierten Internet, bekannt als IP backbone, auf.

Wie aus Fig. 1, links oben ersichtlich, weist ein zellulares Funk-Tele-Kommunikationssystem bzw. -netz GSM Teilnehmereinrichtungen MS auf, die über eine Funkschnittstelle V mit einer Basis-Sende/Empfänger-Station BTS kommunizieren. Die Teilnehmerstationen sind z.B. mobile Stationen MS oder anderweitige mobile und stationäre Endgeräte.

Die Basis-Sende/Empfänger-Station BTS stellt auch Informationskanäle zur Verfügung, wie u.a. einen Kontroll- und Organisationskanal (BCCH), einen Frequenz-Korrekturkanal (FCCH) oder einen Kanal für willkürlichen Zugriff (RACH).

Eine oder mehrere Basis-Sende/Empfänger-Stationen BTS sind zu deren Steuerung mit einer Basisstations-Steuereinrichtung BSC verbunden. Die Basisstations-Steuereinrichtung BSC ist wiederum mit einer Mobilvermittlungsstelle MSC verbunden. Mobilvermittlungsstellen MSC, die innerhalb eines Funknetzes untereinander vernetzt sind, stellen meistens die Funktion einer Besucher-Registrierungsdatenbank bzw. eines Besucherregisters VLR (Visitor Location Register) bereit, welches die Aufenthalts-Registrierungsanforderungen der mobilen Stationen MS entgegen nimmt und somit eine Dezentralisierung des Signalisierungsaufkommens erlaubt. Die Besucherdateien eines Besucherregisters VLR stehen in Kontakt mit entsprechenden Heimatregistern HLR (Home Location Register), von welchen es in jedem Funk-Tele-Kommunikationssystem mindestens eine Instanzierung gibt, welche häufig vorteilhafterweise ebenfalls auf der technischen Plattform einer Mobilvermittlungsstelle MSC bereitgestellt wird. In den Heimatregistern HLR werden teilnehmerspezifische Datensätze gespeichert, z.B. Authentisierungsparameter.

Zudem gibt es in Funk-Kommunikationssystemen spezielle, ausgezeichnete Mobilvermittlungsstellen G-MSC, welche z.B. für Sprache den Zugang zu anderen, heterogenen Netzen, z.B. Festnetzen wie PSTN/ISDN, aber auch anderen Funknetzen ermöglichen. Diese ausgezeichneten Mobilvermittlungsstellen G-MSC werden üblicherweise als Gateway-MSC (G-MSC) bezeichnet.

Datenverkehr, insbesondere Internet-Datenverkehr, wird in Funksystemen, z.B. in GSM-Netzen, vorteilhafterweise über spezielle Netzeinrichtungen, z.B. GSN (GPRS Support Nodes), unmittelbar den Datennetzen zugeführt. Diese Netzkomponenten existieren häufig in der ausführenden Komponente SGSN (Serving GSN) und einer Netzübergangskomponente GGSN (Gateway GSN).

Fig.1 zeigt beispielhaft diese mögliche Ausführung für Mobilfunksysteme der zweiten Generation (GSM). Des weiteren ist ein mögliches Ausführungsbeispiel für Mobilfunksystem der dritten Generation (z.B. UMTS) dargestellt. Dabei sind die üblichen Abkürzungen angegeben, also im Vergleich zu GSM: UE statt MS, NodeB statt BTS,....

Zur Steuerung und Kontrolle des Funk-Tele-Kommunikationssystems GSM ist die Mobilvermittlungsstelle MSC mit einem Betriebs- und Wartungszentrum OMC verbunden. Ferner ist die Mobilvermittlungsstelle MSC, wie beschrieben, mit einem Heimatregister HLR und einem Besucherregister VLR verbunden oder weist diese in sich auf. In dem Heimatregister HLR sind Teilnehmer-spezifische Daten abgespeichert, z.B. der letzte bekannte oder der aktuelle Aufenthaltsort der Teilnehmerstation MS und deren Berechtigung bestimmte Dienste zu benutzen. Im Besucherregister VLR werden auch Daten zu Teilnehmerstationen MS verwaltet, die mit dem Netz kommunizieren, aber einem anderen Netzbetreiber zuzuordnen sind.

Die nachfolgend beschriebenen Entwicklungen sind auch auf andere Funk-Tele-Kommunikationssystem übertragbar, beispielsweise das UMTS.

Wie aus Fig. 1, rechte Seite ersichtlich, weist ein lokales Datennetz LAN, z.B. ein lokales Funknetz WLAN, Stationen auf, die nachfolgend als Host H bezeichnet werden. Ein typisches Beispiel für ein solches Datennetz (W-)LAN ist ein firmeninternes Ethernet. Darin stehen die einzelnen Stationen bzw. Hosts H direkt untereinander oder über Brücken (Bridge) und Hubs miteinander in Verbindung. Ein Hub kann dabei im wesentlichen als eine Verteilereinrichtung angesehen werden, an der mehrere Datenendstationen H zugleich angeschlossen werden können und dann alle Daten zugeleitet bekommen. Eine Brücke ist im wesentlichen einem Hub vergleichbar, bietet aber darüber hinaus eine Möglichkeit einer Segmentierung bzw. Verteilung der hindurchlaufenden Daten.

Neben fest verdrahteten Verbindungen in einem Datennetz LAN gibt es in Funk-Datennetzen WLAN (Wired Lokal Area Network) auch Verbindungen über Funkschnittstellen VL. Für solche Funkverbindungen kann u.a. das sogenannte Bluetooth-Funk-Zugriffsprotokoll (Bluetooth radio AP) verwendet werden. Dabei handelt es sich um ein sehr einfaches Protokoll, das lediglich eine Punkt-zu-Punkt-Verbindung zwischen zwei gerade miteinander kommunizierenden Einrichtungen unterstützt. Es ist somit wesentlich einfacher aufgebaut, als die Protokolle, die bei zellularen Funksystemen verwendet werden.

Hauptsächlich findet in solchen Systemen eine Luftschnittstelle basierend auf dem IEEE 802.11 Standard Anwendung.

Ein solches Datennetz (W-)LAN kann auch einen oder mehrere Diensteserver aufweisen, insbesondere mit nachfolgend beschriebenen logischen Einrichtungen, z.B. einem Domaim-Namen-Server DNS. Diese Einrichtungen können zum Teil aber auch in anderen oder eigenständigen Einrichtungen aufgenommen sein, wobei sie als Klienten- bzw. Serverteil (client part / server part) aufgeteilt und/oder eingerichtet werden können.

Ein HTTP-Server erlaubt dem Teilnehmer "per Mausklick" auf von ihm ausgewählte Internet-Seiten zuzugreifen, ohne die spezifischen IP-Adressen der jeweiligen Anbieter kennen zu müssen.

Mittels eines Dynamischen Host-Konfigurierungs-Protokolls DHCP bzw. eines sogenannten DHCP-Servers wird beim Anschluß eines Host H an das Datennetz (W-)LAN eine Adresse, insbesondere IP-Adresse, vergeben, unter welcher der neu hinzugekommene Host H im Netz eindeutig identifizierbar und ansprechbar ist. Zumeist erfolgt die Adressvergabe variabel, so dass der international für alle Hosts H nur begrenzt verfügbare Adressraum nicht erschöpft. Vorteilhafterweise kann der DHCP-Server IP-Adressen zeitlich limitiert vergeben, so dass ein Host H nach Ablauf einer festgelegten Zeit eine neue IP-Adresse anfordern muß.

Ferner kann der Zugriffs-Server AS einen Authentisierungsund Autorisierungs-Server (AA-Server) aufweisen, der optional als Accounting-Server (AAA-Server) auch eine zentrale Abrechnung von anfallenden Gebühren ermöglichen kann (AAA-Server).

Weitere Servereinrichtungen können dem Anschluss an Netze wie das Internet dienen, beispielsweise sogenannte POP3-Server und/oder SMTP-Server (SMPT: Simple Mail Transfer Protocol), die zum Austausch von elektronischen Briefen (eMails) dienen.

Bei den nachfolgend näher erläuterten Ausführungsbeispielen wird jeweils eine einfache Modifikation und/oder Ergänzung an vorzugsweise jeweils nur einer einzelnen Station SSG in einem der Systeme, d.h. im eigentlichen Datennetz (W-)LAN und/oder im eigentlichen Tele-Kommunikationsnetz GSM/UMTS vorgenommen, so dass insbesondere technisch bauliche Änderungen an den Teilnehmerstationen MS bzw. Datenendgeräten H der jeweiligen Netze vermeidbar sind.

Im Idealfall reicht die Einführung einer nachfolgend als Diensteauswahl-Überleiteinrichtung bzw. Diensteauswahl-Gateway SSG (Service Selection Gateway) bezeichneten Einrichtung in einem Datennetz (W-)LAN, wobei zur Steuerung erforderlicher Funktionen das für sich bekannte einfache Netzmanagement-Protokoll SNMP (Simple Network Management Protocol) einsetzbar ist.

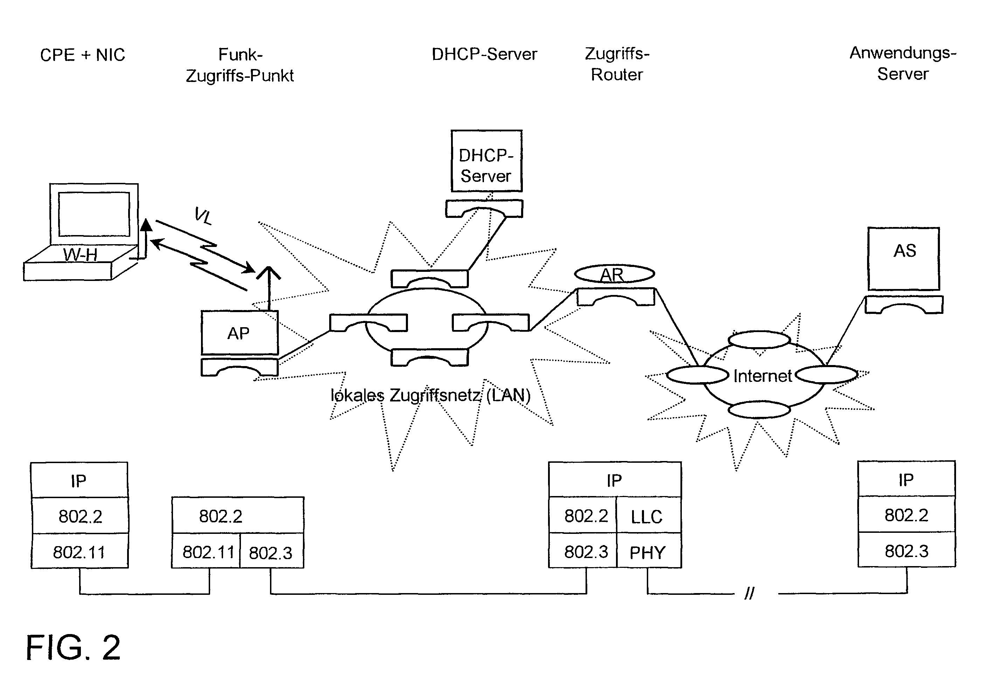

Wie auch aus Fig. 2 ersichtlich, können die meisten Elemente des Systems unverändert verwendet werden, obwohl eine Vielzahl von Standardeinrichtungen die Möglichkeit erhält, auf z.B. die Datenbank eines Heimatregisters HLR zuzugreifen, das in einem Mobilfunknetz GSM oder an einem entfernten Serverstandort eines anderen Datennetzes (W-)LAN bereitsteht. Teils weisen die nachfolgend beschriebenen Einrichtungen aber auch Komponenten/Funktionen eines Diensteauswahl-Gateways SSG auf.

So kann ein handelsüblicher Standard-Host W-H mit einer Zentralverarbeitungseinrichtung CPE und einer Netzschnittstellenkarte NIC (Net Interface Card) weiterhin über eine Funkschnittstelle VL mit einer handelsüblichen Brücke kommunizieren. Dabei können bestehende Protokolle für einen DHCP-Zugriff verwendet werden, z.B. 802.11 oder ein HiperLAN-Funk-Zugriffs-Protokoll. Die Brücke bildet in üblicher Art und Weise die Schnittstelle zwischen z.B. den Protokollen für Datennetz-Funkschnittstellen (802.11) und Datennetz-Kabelschnittstellen (802.3).

In dem System können außerdem herkömmliche Funkstationen eingesetzt werden, die als alternative Funktechnologie Punkt-zu-Punkt-Verbindungen mit anderen Einrichtungen, z.B. einer Datenendeinrichtung H mit einer Funkschnittstelle, unterstützen. Ein diesbezüglich übliches Standardprotokoll ist dafür das sogenannte Bluetooth-Funkzugriffs-Protokoll.

Im Falle einer für den Radiozugang verwendeten Punkt-zu-Punkt-Verbindung werden im Netz vorteilhafterweise einer oder mehrere Server (Access Server) bereitgestellt, die die logische Punkt-zu-Punkt-Verbindung netzseitig terminieren.

Ein solches lokales Funk-Zugangsnetz (WLAN) kann Teilnehmern schnurlosen Datenzugang z.B. zur Nutzung von Internet-Diensten ermöglichen. Im Falle eines unauthentisierten, nicht vergebührten Teilnehmerzuganges reicht es aus, eine Anordnung gemäß Fig. 2 bereitzustellen.

Eine drahtlos an ein lokales Netz (W)-LAN angebundene Teilnehmer-Endeinrichtung W-H kann über eine Luftschnittstelle VL (IEEE 802.11) einen Funk-Zugriffspunkt AP (Access Point) kontaktieren, welcher vorteilhafterweise netztopologisch als Brücke (LAN-bridge) realisiert ist. Die für diese Datensitzung (session) benötigte Zugriffsidentität, z.B. IP-Adresse, wird dynamisch von einem DHCP-Server zugewiesen. Der DHCP-Server konfiguriert in der Teilnehmer-Endeinrichtung W-H u.a. auch die Adresse, z.B. IP-Adresse, eines Zugangsrouters AR (Access Router) zum IP-Transportnetz. Fig. 2 zeigt zudem ein Beispiel der üblicherweise verwendeten Protokollschichten, im Beispiel basierend auf dem wohlbekannten IEEE 802.11 Standard.

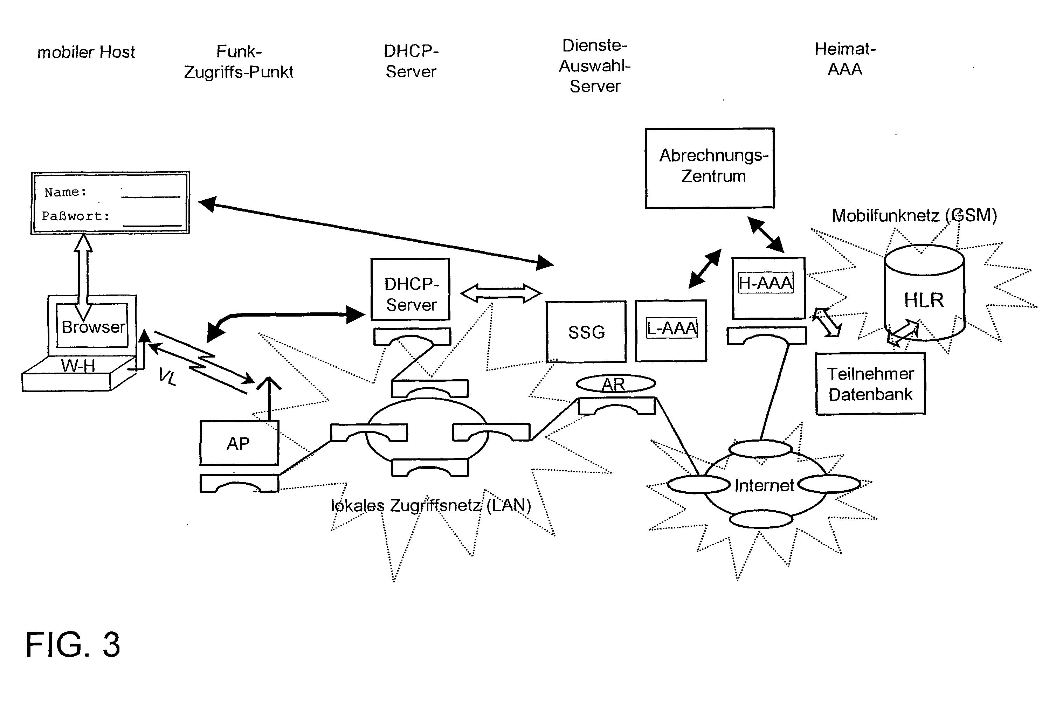

Ein besonders vorteilhafter Aspekt des in Fig. 3 dargestellten Ausführungsbeispiels besteht darin, mit einfachen Mitteln Ergänzungen bereitzustellen, die über diesen gebührenfreien, unauthentisierten Datenzugriff hinaus Betreibern von vereinzelten lokalen Datennetzen (W-)LAN sowie Betreibern von zweiten Netzen GSM unter Nutzung von lokalen Netzen (W-)LAN einen authentisierbaren und vergebührbaren schnurlosen Teilnehmerzugang entweder mit Mitteln des lokalen Netzes oder mit Mitteln des zweiten Netzes zu ermöglichen.

Ein Teilnehmer greift gemäß oben beschriebenem Verfahren auf einen Funk-Zugriffspunkt AP schnurlos zu und bekommt daraufhin eine temporäre Identität, z.B. eine IP-Adresse, von einem DHCP-Server zugewiesen. Üblicherweise nutzen Teilnehmer eine spezielle Internet- bzw. Netz-Zugangssoftware, die als Browser bezeichnet wird, und wählen "per Mausklick" oder manueller Eingabe über eine Tastatur eine Internetseite, die durch eine universelle Datenquellenangabe in Textform URL (Universal Ressource Locator) referenziert wird. Die Netzzugangssoftware ist in der Lage einen bestimmten Dienste- bzw. Diensteauswahl-Server SSG, insbesondere HTTP-Server, dessen IP-Adresse dem Teilnehmerendgerät W-H vom DHCP-Server mitgeteilt wurde, anzuwählen bzw. zu adressieren. Die Adresse des Dienste-Servers SSG ist vorteilhafterweise gleichbedeutend mit der IP-Adresse des Diensteauswahl-Servers SSG. Dieser HTTP-Server ist in der Lage die gewünschte URL auszuwerten und die vom Teilnehmern gewünschte Internetseite darzustellen. Gleichfalls kann der Diensteauswahl-Server SSG selbst Internet-Seiten generieren und auf der Teilnehmer-Endeinrichtung zur Darstellung bringen.

Der Diensteauswahl-Server SSG führt vorteilhafterweise eine Referenztabelle, in welcher in Abhängigkeit von der u.U. temporären Teilnehmeridentität bzw. Teilnehmer-Endeinrichtungsidentität, z.B. der IP-Adresse, der jeweilige Authentisierungszustand abgelegt wird. Der Diensteauswahl-Server SSG kann nicht-authentisierten Teilnehmern eine Internet-, insbesondere HTTP-Seite mit einer Authentisierungsaufforderung (Name, Paßwort) auf der Teilnehmer-Endeinrichtung W-H mit Hilfe der dort vorhandenen Netzzugangssoftware darstellen.

Die vom Teilnehmer bzw. der Teilnehmer-Endeinrichtung W-H erhaltenen Teilnehmer-Identifiaktionsdaten (Name, Paßwort) können nun vom Diensteauswahl-Server SSG verifiziert werden, indem entweder auf lokal vorhandene Teilnehmerdatensätze (AAA-Server) oder auf Teilnehmerdatensätze anderer lokaler Netze (AAA-Client) oder auf Teilnehmerdatensätze zweiter, heterogener Netze GSM, UMTS, PSTN zugegriffen wird.

Dazu werden zweckmäßigerweise Verfahren zur Koppelung lokaler Netze (W-)LAN an heterogene, zweite Netze GSM, UMTS,... bereitgestellt, um solche beschriebene Authentisierungen und Vergebührungen ermöglichen zu können.

Beispielsweise werden teilnehmerspezifische Datensätze von Teilnehmern, die Dienste des lokalen Netzes nutzen wollen, in einem zweiten Netz GSM bereit gehalten. Der Dienstezugangs-Server SSG weist eine lokale AAA-Funktionalität L-AAA auf, welche auf eine Datenbank bzw. Datenbasis für Authentisierung und Vergebührung von Diensten zugreifen kann. Diese Datenbasis dient auch dem Heimatregister HLR eines zweiten Netzes GSM für Authentisierung und Vergebührung von Diensten des zweiten Netzes.

Vorteilhafterweise verfügt das Heimatregister HLR zusammen mit der gemeinsamen Datenbasis für teilnehmerspezifische Datensätze für Authentisierung und Vergebührung eines lokalen (W-)LAN und zweiten Netzes GSM selbst über eine AAA-Server-Funktionalität bezüglich des lokalen Netzes (W-)LAN für den Datenbasiszugriff für teilnehmerspezifische Datensätze zur Authentisierung und Vergebührung von Diensten des lokalen Netzes (W-)LAN.

Somit kann ein Teilnehmer eine Teilnehmerschaft im lokalen Netz (W-)LAN und im zweiten Netz GSM, UMTS besitzen. Die zur Authentisierung und Vergebührung notwendigen teilnehmerspezifischen Datensätze zur Nutzung von Diensten im lokalen Netz (W-)LAN oder zweiten Netz GSM können jedoch weiterhin auch nur an einer zentralen Stelle, z.B. der Heimatdatenbasis bzw. in dem Heimatregister HLR des zweiten Netzes GSM gehalten werden.

Der HLR-seitige AAA-Server kann vom lokalen Netz (W-)LAN empfangene, vergebührungs-relevante Daten gemäß den im zweiten Netz üblichen Verfahren aufbereiten und an ein Vergebührungszentrum des zweiten Netzes senden, z.B. mittels des RADIUS-Protokolls.

Das Heimatregister HLR des Tele-Kommunikationsnetzes GSM präsentiert sich somit unter Verwendung des bestehenden Standards durch diese Erweiterungen dem lokalen Netz (W-)LAN als eine für Datennetze, insbesondere lokale Datennetze, typische AAA-Komponente.

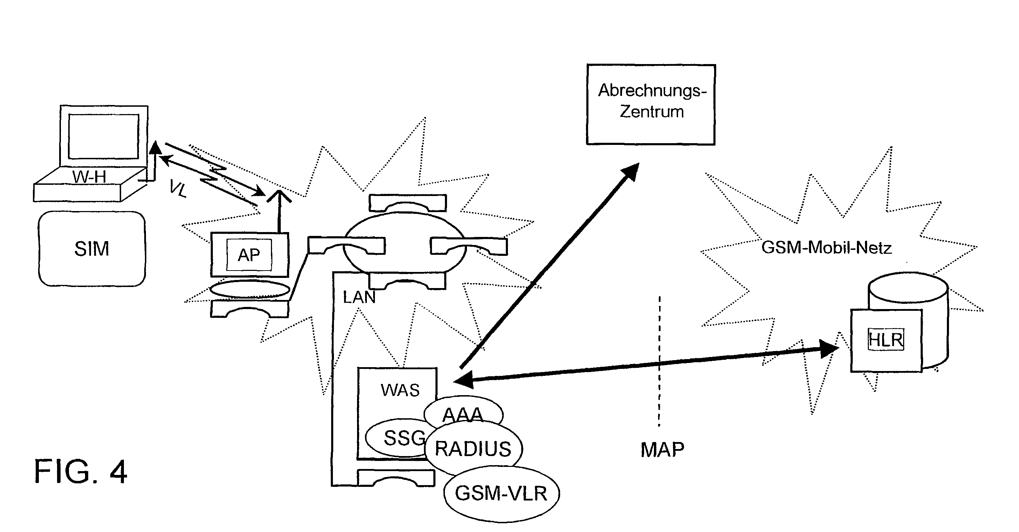

Eine weiteres Verfahren stellt das anhand von Fig. 4 beschriebene Ausführungsbeispiel dar. Fig. 4 zeigt einen schnurlosen Teilnehmerzugang zu einem lokalen Netz W-LAN wie oben beschrieben. Im Unterschied zu obigem Ausführungsbeispiel stellt hier das lokale Netz W-LAN selbst eine Funktionalität in Form eines Verbindungs-Servers WAS (Wireless Access Server) bereit, welcher neben der beschriebenen Funktionalität eines Diensteauswahl-Gateways bzw. Diensteauswahl-Servers SSG und weiterer Diensteunterstützender Funktionen (DNS, HTTP) diejenigen Besucherregister-(VLR)-Funktionen eines zweiten Netzes bereitstellt, die zur Abfrage bzw. dem Empfang von authentisierungs- bez. vergebührungsrelevanten, teilnehmerspezifischen Daten aus dem Heimatregister HLR des zweiten Netzes GSM, UMTS notwendig sind. In der Folge stellt der Funkzugangs-Unterstützungsserver WAS diese Daten im lokalen Netz (W-)LAN auf Schnittstellen-Protokollen, z.B. RADIUS, die im lokalen Netz (W-)LAN üblicherweise verwendet werden, zur Verfügung.

Die Verbindungsteuerung zwischen dem Verbindungs-Server WAS und dem Heimatregister HLR erfolgt vorteilhafterweise über das für sich bekannte MAP-Protokoll (Mobile Application Part).

Die teilnehmerseitige Datenendeinrichtung (Host) verfügt vorteilhafterweise über einen SIM-Kartenleser (SIM: Subscriber Identification Module) und kann die an sie herangetragenen Authentisierungs-Aufforderungen in der Art des zweiten Netzes GSM bearbeiten. Mit dem SIM-Kartenleser kann folglich die Identitätsinformation der SIM-Karte z.B. eines im zweiten Netz GSM, UMTS registrierten Teilnehmers bzw. einer darin registrierten Teilnehmerstation MS ausgelesen werden.

Alternativ dazu kann z.B. ein tragbarer Computer (Notebook) über eine Infrarot-Schnittstelle mit einer Teilnehmerstation MS des zweiten Netzes GSM kommunizierenden, eine Anfrage abschicken und die benötigten Antwortwerte vorteilhafterweise auf die gleiche Weise auslesen.

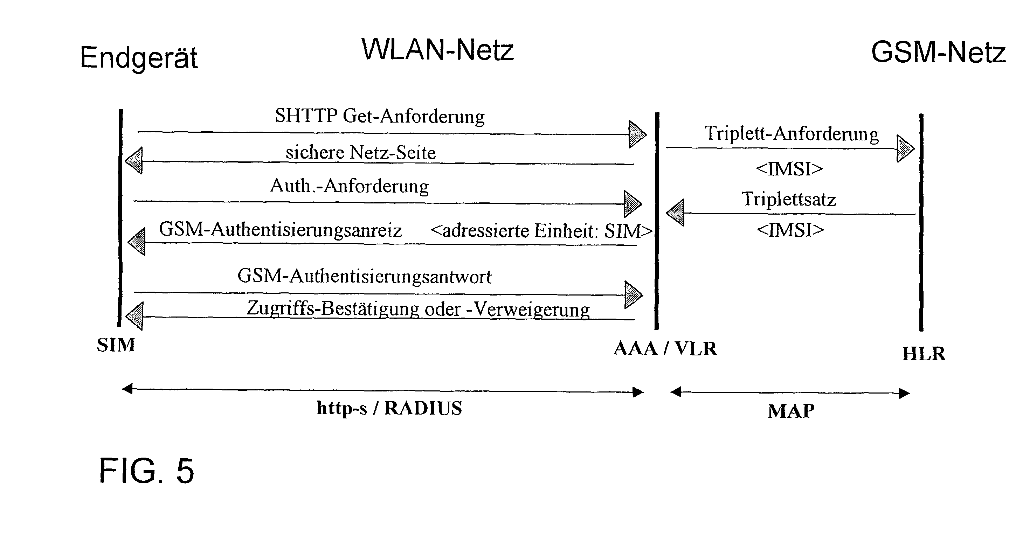

Fig. 5 zeigt einen möglichen, derzeit typischen Meldungsablauf für eine Authentisierung, und zwar z.B. basierend auf dem GSM-Standard und einem typischen HTTP-Dialog.

Beim Anwählen einer Internetseite erfolgt von der teilnehmerseitigen Zugangssoftware (Browser) eine Anforderung des Aufbaus eines Abhör-gesichterten (secure) Internetseiten-Dialogs mittels des bekannten HTTP (Hyper Text Transmission Protocol) an den HTTP-Server, welcher als Teil einer Diensteauswahl-Überleiteinrichtung bzw. eines Diensteauswahl-Gateways SSG ausgebildet sein kann.

Aufgrund dieser Anforderung werden nun seitens des Servers ein gesicherter HTTP-Dialog aufgebaut und eine (abhör)sichere Internetseite auf dem Host dargestellt.

Gleichzeitig fordert der Server einen Datensatz (Triplets) aus der GSM-Heimatdatenbasis HLR an, und zwar mit Bezug auf die im Host verwendete Teilnehmeridentität (IMSI, International Mobile Subscriber Identity). Sobald die angeforderten Authentisierungsparameter vom Server erhalten wurden, kann mittels der gesicherten (secure) HTTP-Verbindung (SHTTP) ein Authentisierungsanreiz gemäß GSM (challenge/response) unter Zuhilfenahme von SIM- (Subscriber Identification Module) Funktionalitäten erfolgen. Um die Zugangssicherheit noch weiter zu erhöhen, kann der Host optional eine Authentisierung des Netzes selbst anreizen. Das Netz kann die Antwort auf die Netz-Authentisierungsanforderung zusammen mit der Authentisierungsanforderung an den Host übermitteln. In Abhängigkeit vom Authentisierungsergebnis können Server und/oder Host weiteren Datenzugang erlauben oder verbieten.

Der Funkzugangs-Unterstützungsserver WAS kann im lokalen Netz (W-)LAN erzeugte, vergebührungs-relevante Daten gemäß den im zweiten Netz üblichen Verfahren aufbereiten und/oder direkt an ein Vergebührungszentrum des zweiten Netzes senden, z.B. über RADIUS.
Das lokale Netz (W-)LAN präsentiert sich durch diese Erweiterungen gegenüber dem zweiten Netz GSM, UMTS,... als eine dem zweiten Netz GSM bekannte Netzkomponente, z.B. als Besucherregister VLR.

## Patentansprüche

1. Verfahren zum Durchführen eines Datenaustauschs in einem auf einer ersten Technologie aufbauenden ersten Netz ((W-)LAN), mit
- einer oder mehreren Netzeinrichtungen und/oder Schnittstellen (Hub, Bridge, VL), die zum Aufbau einer Kommunikation mit zumindest einer Station (W-H; H) der ersten Technologie ausgebildet sind, und
- Basisfunktionen (AAA, DHCP, DNS) für einen autonomen Betrieb des ersten Netzes,
**dadurch gekennzeichnet, dass**
- für einen Datenaustausch mit einem auf einer zweiten Technologie aufbauenden zweiten Netz (GSM, UMTS) eines der beiden Netze netzspezifische logische Funktionen (VLR; AAA, DHCP, DNS) des jeweils anderen Netzes innerhalb des eigenen Netzes bereitstellt, wobei durch die netzspezifischen logischen Funktionen (VLR; AAA, DHCP, DNS) eine Authentisierung und/oder Autorisierung der Station (W-H; H; MS) in dem ersten oder dem zweiten Netz ermöglicht wird.

2. Verfahren nach Anspruch 1, bei dem
eine Verbindungseinrichtung (WAS; SSG) des ersten Netzes gegenüber dem zweiten Netz als generischer Teil des zweiten Netzes abgebildet und dadurch eine wechselseitige Interoperabilität aufgebaut wird.

3. Verfahren nach Anspruch 1 oder 2, bei dem
das erste Netz ((W-)LAN) an das zweite Netz (GSM, UMTS) über eine dem zweiten Netz eigene, typische Schnittstelle (MAP) angeschlossen wird.

4. Verfahren nach einem vorstehenden Anspruch, beim dem
das erste Netz ((W-)LAN) die Funktion eines Besucherregisters (VLR) des zweiten Netzes (GSM, UMTS) übernimmt.

5. Verfahren nach einem vorstehenden Anspruch, bei dem
das erste Netz ((W-)LAN) mittels eines Verbindungs-Servers (WAS) Funktionen und Meldungen einer Koppelschnittstelle (MAP) auf spezifische Funktionen und Meldungen des ersten Netzes ((W-)LAN, RADIUS) umsetzt.

6. Verfahren nach Anspruch 5, bei dem
der Verbindungs-Server (WAS) über eine Remote Authentication Dial In User Service-(RADIUS-) Klienten- oder Dialogund/oder Dienste-intermittierende , Proxy- Funktionalität verfügt.

7. Verfahren nach einem vorstehenden Anspruch, bei dem
das erste Netz ((W-)LAN) mittels eines Verbindungs-Servers (WAS) auf die Heimatdatenbasis (HLR) des zweiten Netzes (GSM, UMTS), eines zellularen Mobilfunknetzes, zugreift.

8. Verfahren nach einem vorstehenden Anspruch, bei dem
das erste Netz ((W-)LAN) authentisierungs-relevante Teilnehmerinformationen (Triplets) vom zweiten Netz (GSM, UMTS), von dessen Heimatregister (HLR), anfordert und/oder empfängt.

9. Verfahren nach einem vorstehenden Anspruch, bei dem
das erste Netz ((W-)LAN) durch einen Verbindungs-Server (WAS) über Hyper Text Transmission Protocol-(HTTP-) Server-Funktionalität verfügt.

10. Verfahren nach einem vorstehenden Anspruch, bei dem
das erste Netz ((W-)LAN) durch einen Verbindungs-Server (WAS) eine Authentisierung der Station (H; W-H; MS), eines mobilen Teilnehmers (MS) oder eines mobilen Datenendgerätes (H; W-H), anreizt und/oder durchführt.

11. Verfahren nach einem vorstehenden Anspruch, bei dem
das erste Netz ((W-)LAN) und die Station (W-H) für deren gemeinsame Kommunikation einen Schlüssel zur Verschlüsselung einer Luftschnittstelle (VL) aus vom zweiten Netz (GSM, UMTS) erhaltenen Authentisierungsparametern generieren und/oder verwenden.

12. Verfahren nach einem vorstehenden Anspruch, bei dem
das erste Netz ((W-)LAN) und/oder die Station (H; W-H), insbesondere ein mobiles Datenendgerät (W-H), auf zur Authentisierung erforderliche Daten und Funktionen einer dem zweiten Netz zugeordneten Subscriber Identification Module- (SIM-) Karte (GSM, UMTS) zugreifen.

13. Verfahren nach Anspruch 12, bei dem
- sich ein dem zweiten Netz zugeordneter SIM-Kartenleser oder die dem zweiten Netz (GSM, UMTS) zugeordnete Teilnehmer-Station (MS) im Bereich der Station (H; W-H) des ersten Netzes ((W-)LAN) befindet,
- für Authentisierungszwecke eine Identitätsinformation (IMSI) der SIM-Karte bzw. der Teilnehmer-Station (MS) über das erste Netz ((W-)LAN) einer dem ersten Netz ((W-)LAN) zugeordneten Einrichtung (WAS, SSG), die Besucherregisterfunktionalität (VLR) des zweiten Netzes (GSM, UMTS) aufweist, übertragen wird,
- von dieser Einrichtung (WAS, SSG) aus dem ersten Netz ((W-)LAN) eine Anforderung von Authentisierungsparametern (Triplett) an das zweite Netz (GSM, UMTS) übermittelt wird, wobei diese Einrichtung aus Sicht des zweiten Netzes als eine Besucherregistereinrichtung (VLR) des zweiten Netzes wirkt,
- vom zweiten Netz (GSM, UMTS) an das erste Netz ((W-)LAN) angeforderte Daten (Triplettsatz/Triplettsätze) mit Bezug zur Identitätsinformation (IMSI) zur Authentisierung übermittelt werden und
- im ersten Netz ((W-)LAN) abhängig vom Authentisierungsergebnis ein Datenzugang für die Station (H;W-H) erlaubt oder verboten wird.

14. Verfahren, insbesondere nach einem vorstehenden Anspruch, in einem auf einer ersten Technologie aufbauenden ersten Netz ((W-)LAN) mit
- einer oder mehreren Netzeinrichtungen und/oder Schnittstellen (Hub, Bridge, VL), die zum Aufbau einer Kommunikation mit zumindest einer Station (W-H; H) der ersten Technologie ausgebildet sind, und
- Basisfunktionen (AAA, DHCP, DNS) für einen autonomen Betrieb des ersten Netzes,
**dadurch gekennzeichnet, dass**
- Daten, die für einen Teilnehmer der Station (W-H; H) und/oder die Station (W-H; H) spezifisch sind, von einer netzexternen Datenquelle (HLR) abgerufen und/oder bereitgestellt werden.

15. Verfahren nach Anspruch 14, bei dem
die Heimatdatenbasis (HLR) des zweiten Netzes über eine Datenbasis verfügt, in welcher Teilnehmerdatensätze in der typischen Struktur des ersten Netzes abgelegt sind (Name, Paßwort).

16. Verfahren nach einem der Ansprüche 14 oder 15, bei dem Teilnehmerdatensätze in der typischen Struktur (Name, Paßwort) des ersten Netzes ((W-)LAN) teilnehmerspezifisch mit den Datensätzen der Struktur (IMSI) des zweiten Netzes (GSM, UMTS, PSTN, ISDN) verknüpft werden.

17. Verfahren nach einem der Ansprüche 14 bis 16, bei dem
- ein Kommunikationsteilnehmer über eine Teilnehmerschaft im ersten Netz ((W-)LAN) und über eine Teilnehmerschaft im zweiten Netz verfügt und
- durch eine teilnehmerspezifische Verknüpfung der teilnehmerspezifischen Datensätze aus beiden Netzen eine Vergebührung genutzter Dienste des ersten Netzes ((W-)LAN) über die Vergebührungs-Infrastruktur des zweiten Netzes durchgeführt wird.

18. Verfahren nach einem vorstehenden Anspruch, bei dem für eine Authentisierung relevante Daten zwischen der Station (W-H; H) des ersten Netzes ((W-)LAN) und einer Teilnehmer-Endeinrichtung (MS, UE) eines zweiten Netzes (GSM, UMTS) ausgetauscht werden.

19. Verfahren nach Anspruch 18, bei dem
die Station (W-H; H) als Teilnehmer-Endeinrichtung des ersten Netzes ((W-)LAN) Authentisierungs-Rufanforderungen an die Teilnehmer-Endeinrichtung (MS, UE) des zweiten Netzes (GSM, UMTS) übermittelt und entsprechende Antwortwerte von letzterem empfängt.

20. Netzeinrichtung eines auf einer ersten Technologie aufbauenden ersten Netzes ((W-)LAN) mit einer oder mehreren Netzeinrichtungen und/oder Schnittstellen (Hub, Bridge, VL), die zum Aufbau einer Kommunikation mit zumindest einer Station (W-H; H) der ersten Technologie ausgebildet sind, und Basisfunktionen (AAA, DHCP, DNS) für einen autonomen Betrieb des ersten Netzes,
**dadurch gekennzeichnet, dass**
- die Netzeinrichtung als eine Zugriffseinrichtung (WAS; SSG) als Teil eines zweiten Netzes (GSM, UMTS) zweiter Technologie derart ausgebildet ist, dass
- die Netzeinrichtung netzspezifische logische Funktionen von Komponenten des zweiten Netzes (GSM, UMTS) bereitstellt, wobei durch die netzspezifischen logischen Funktionen (VLR) eine Authentisierung und/oder Autorisierung einer Station (W-H; H) der ersten oder der zweiten Technologie in dem zweiten Netz (GSM, UMTS) ermöglicht wird.

## Claims

1. Method for performing data interchange in a first network ((W-)LAN) based on a first technology, having
- one or more network devices and/or interfaces (hub, bridge, VL) which are designed for setting up communication with at least one station (W-H; H) using the first technology, and
- basic functions (AAA, DHCP, DNS) for autonomous operation of the first network,
**characterized in that**
- one of the two networks provides network specific logic functions (VLR; AAA, DHCP, DNS) of the respective other network for data interchange with a second network (GSM, UMTS) based on a second technology within its own network, with the network specific logic functions (VLR; AAA, DHCP, DNS) allowing authentication and/or authorization of the station (W-H; H; MS) in the first or in the second network.

2. Method according to Claim 1, in which
a connection device (WAS; SSG) in the first network is mapped for the second network as a generic part of the second network, and this sets up reciprocal interoperability.

3. Method according to Claim 1 or 2, in which
the first network ((W-)LAN) is connected to the second network (GSM, UMTS) by means of a typical interface (MAP) dedicated to the second network.

4. Method according to one of the preceding claims, in which
the first network ((W-)LAN) takes on the function of a visitor location register (VLR) in the second network (GSM, UMTS).

5. Method according to one of the preceding claims, in which
the first network ((W-)LAN) uses a connection server (WAS) to convert functions and messages from a switching interface (MAP) into specific functions and messages in the first network ((W-)LAN, RADIUS).

6. Method according to Claim 5, in which
the connection server (WAS) has a Remote Authentication Dial In User Service (RADIUS) client or dialogue and/or service intermittent proxy-functionality.

7. Method according to one of the preceding claims, in which
the first network ((W-)LAN) uses a connection server (WAS) to access the home location database (HLR) in the second network (GSM, UMTS), in a cellular mobile radio network.

8. Method according to one of the preceding claims, in which
the first network ((W-)LAN) requests and/or receives authentication related subscriber information (triplets) from the second network (GSM, UMTS), from its home location register (HLR).

9. Method according to one of the preceding claims, in which
the first network ((W-)LAN) has Hyper Text Transmission Protocol (HTTP) server functionality by virtue of a connection server (WAS).

10. Method according to one of the preceding claims, in which
the first network ((W-)LAN) prompts and/or performs authentication of the station (H; W-H; MS), of a mobile subscriber (MS) or of a mobile data terminal (H; W-H), by virtue of a connection server (WAS).

11. Method according to one of the preceding claims, in which
the first network ((W-)LAN) and the station (W-H) communicate with one another by generating, and/or using, a key for encrypting an air interface (VL) from authentication parameters obtained from the second network (GSM, UMTS).

12. Method according to one of the preceding claims,
in which
the first network ((W-)LAN) and/or the station (H; W-H), particularly a mobile data terminal (W-H), access data and functions on a Subscriber Identification Module (SIM) card (GSM, UMTS) associated with the second network which are required for authentication.

13. Method according to Claim 12, in which
- a SIM card reader associated with the second network or the subscriber station (MS) associated with the second network (GSM, UMTS) is in the region of the station (H; W-H) in the first network ((W-)LAN),
- for authentication purposes, an identity information item (IMSI) for the SIM card or for the subscriber station (MS) is transmitted via the first network ((W-)LAN) for a device (WAS, SSG) which is associated with the first network ((W-)LAN) and has a visitor location register functionality (VLR) in the second network (GSM, UMTS),
- this device (WAS, SSG) transmits a request for authentication parameters (triplet) to the second network (GSM, UMTS) from the first network ((W-)LAN), with this device acting as a visitor location register device (VLR) from the point of view of the second network,
- the second network (GSM, UMTS) transmits requested data (triplet set/triplet sets) relating to the identity information (IMSI) to the first network ((W-)LAN) for authentication purposes, and
- depending on the result of authentication, the station (H; W-H) is permitted or refused data access in the first network ((W-)LAN).

14. Method, particularly according to one of the preceding claims, in a first network
((W-)LAN), based on a first technology, having
- one or more network devices and/or interfaces (hub, bridge, VL) which are designed for setting up communication with at least one station (W-H; H) using the first technology, and
- basic functions (AAA, DHCP, DNS) for autonomous operation of the first network,
**characterized in that**
- data which are specific to a subscriber on the station (W-H; H) and/or to the station (W-H; H) are retrieved from and/or provided by a data source (HLR) external to the network.

15. Method according to Claim 14, in which
the home location database (HLR) in the second network has a database storing subscriber data records in the typical structure of the first network (name, password).

16. Method according to one of Claims 14 or 15, in which
subscriber data records in the typical structure (name, password) of the first network ((W-)LAN) are linked on a subscriber specific basis to the data records with the structure (IMSI) of the second network (GSM, UMTS, PSTN, ISDN).

17. Method according to one of Claims 14 to 16, in which
- a communications subscriber has a subscription in the first network ((W-)LAN) and a subscription in the second network, and
- subscriber specific linkage of the subscriber specific data records from the two networks implements charging for services used in the first network ((W-)LAN) using the charging infrastructure in the second network.

18. Method according to one of the preceding claims, in which
authentication related data are interchanged between the station (W-H; H) in the first network ((W-)LAN) and a subscriber terminal (MS, UE) in a second network (GSM, UMTS).

19. Method according to Claim 18, in which
the station (W-H; H), as a subscriber terminal in the first network ((W-)LAN), transmits authentication challenges to the subscriber terminal (MS, UE) in the second network (GSM, UMTS) and receives corresponding response values from the latter.

20. A network device in a first network ((W-)LAN) based on a first technology, having one or more network devices and/or interfaces (hub, bridge, VL) which are designed for setting up communication with at least one station (W-H; H) using the first technology, and basic functions (AAA, DHCP, DNS) for autonomous operation of the first network,
**characterized in that**
- the network device as an access device (WAS; SSG) is in the form of part of a second network (GSM, UMTS) using the second technology such that
- the network device provides network specific logic functions of components in the second network (GSM, UMTS), with the network specific logic functions (VLR) allowing authentication and/or authorization of a station (W-H; H) using the first or second technology in the second network (GSM, UMTS).

## Revendications

1. Procédé en vue de la réalisation d'un échange de données dans un premier réseau ((W-)LAN) qui est bâti sur une première technologie et qui comprend:
- un ou plusieurs dispositifs de réseau et/ou interfaces (répartiteurs, ponts, VL) qui sont configurés pour l'établissement d'une communication avec au moins un poste (W-H; H) basé sur la première technologie et
- des fonctions de base (AAA, DHCP, DNS) pour un service autonome du premier réseau,
**caractérisé en ce que**
- pour un échange de données avec un deuxième réseau (GSM, UMTS) bâti sur une deuxième technologie, l'un des deux réseaux fournit à l'intérieur de son propre réseau des fonctions logiques (VLR; AAA, DHCP, DNS) spécifiques à l'autre réseau, les fonctions logiques (VLR; AAA, DHCP, DNS) spécifiques au réseau permettant une authentification et/ou une autorisation du poste (W-H, H; MS) dans le premier ou deuxième réseau.

2. Procédé selon la revendication 1, dans lequel
un dispositif de liaison (WAS; SSG) du premier réseau se présente vis-à-vis du deuxième réseau sous la forme d'une partie générique du deuxième réseau, une interopérabilité mutuelle étant ainsi établie.

3. Procédé selon les revendications 1 ou 2, dans lequel
le premier réseau ((W-)LAN) est raccordé au deuxième réseau (GSM, UMTS) par l'intermédiaire d'une interface (MAP) typique propre au deuxième réseau.

4. Procédé selon l'une des revendications précédentes, dans lequel
le premier réseau ((W-)LAN) joue le rôle d'un registre des visiteurs (VLR) du deuxième réseau (GSM, UMTS).

5. Procédé selon l'une des revendications précédentes, dans lequel
le premier réseau ((W-)LAN) convertit au moyen d'un serveur de liaison (WAS) des fonctions et des messages d'une interface de couplage (MAP) en des fonctions et messages spécifiques au premier réseau ((W-)LAN, RADIUS).

6. Procédé selon la revendication 5, dans lequel
le serveur de liaison (WAS) dispose d'une fonctionnalité RADIUS (Remote Authentication Dial-In User Service), de clients ou de dialogue et/ou de service, intermittente, Proxy.

7. Procédé selon l'une des revendications précédentes, dans lequel
le premier réseau ((W-)LAN) accède au moyen d'un serveur de liaison (WAS) à la base de données de domiciliation des abonnés (HLR) du deuxième réseau (GSM, UMTS) qui est un réseau cellulaire de radiocommunication mobile.

8. Procédé selon l'une des revendications précédentes, dans lequel
le premier réseau ((W-)LAN) demande et/ou reçoit du registre de domiciliation des abonnés (HLR) du deuxième réseau (GSM, UMTS) des informations qui permettent l'authentification des abonnés ("triplets").

9. Procédé selon l'une des revendications précédentes, dans lequel
le premier réseau ((W-)LAN) dispose d'une fonctionnalité de serveur de protocole de transmission hypertexte (HTTP) par l'intermédiaire d'un serveur de liaison (WAS).

10. Procédé selon l'une des revendications précédentes, dans lequel
le premier réseau ((W-)LAN) amène et/ou exécute par l'intermédiaire d'un serveur de liaison (WAS) l'authentification du poste (H; W-H; MS) d'un abonné mobile (MS) ou d'un terminal de données mobile (H; W-H).

11. Procédé selon l'une des revendications précédentes, dans lequel
le premier réseau ((W-)LAN) et le poste (W-H) génère et/ou utilise pour leur communication commune une clé de cryptage d'une interface radio (VL) à partir de paramètres d'authentification reçus du deuxième réseau (GSM, UMTS).

12. Procédé selon l'une des revendications précédentes, dans lequel
le premier réseau ((W-)LAN) et/ou le poste (H; W-H), en particulier un terminal de données mobile (W-H), accède aux données et fonctions nécessaires pour l'authentification d'une carte (GSM, UMTS) de module d'identification d'abonné (SIM - "Subscriber Identification Module") associée au deuxième réseau.

13. Procédé selon la revendication 12, dans lequel:
- un lecteur de carte SIM associé au deuxième réseau ou le poste d'abonné (MS) associé au deuxième réseau (GSM, UMTS) se trouve dans la zone du poste (H; W-H) du premier réseau ((W-)LAN),
- en vue de l'authentification, une information d'identité (IMSI) de la carte SIM ou du poste d'abonné (MS) est transmise par l'intermédiaire du premier réseau ((W-)LAN) à un dispositif (WAS, SSG) associé au premier réseau ((W-)LAN) qui présente une fonctionnalité de registre des visiteurs (VLR) du deuxième réseau (GSM, UMTS),
- ce dispositif (WAS, SSG) du premier réseau ((W-)LAN) transmet au deuxième réseau (GSM, UMTS) une demande de paramètres d'authentification ("triplet"), ce dispositif agissant du point de vue du deuxième réseau comme dispositif de registre de visiteurs (VLR) du deuxième réseau,
- les données demandées au premier réseau ((W-)LAN) par le deuxième réseau (GSM, UMTS) (jeu ou jeux de triplets) et concernant les informations d'identité (IMSI) sont transmises pour authentification et
- dans le premier réseau ((W-)LAN), un accès du poste (H; W-H) aux données est permis ou interdit en fonction du résultat de l'authentification.

14. Procédé, en particulier selon l'une des revendications précédentes,
dans un premier réseau ((W-)LAN) bâti sur une première technologie, avec:
- un ou plusieurs dispositifs de réseau et/ou interfaces (répartiteurs, ponts, VL), qui sont configurés pour établir une communication avec au moins un poste (W-H; H) de la première technologie et
- des fonctions de base (AAA, DHCP, DNS) qui permettent une exploitation autonome du premier réseau,
**caractérisé en ce que**
- les données, spécifiques à un abonné, du poste (W-H; H) et/ou du poste (W-H; H) sont appelées et/ou préparées par une source de données (HLR) externe au réseau.

15. Procédé selon la revendication 14, dans lequel
la base de données de domiciliation des abonnés (HLR) du deuxième réseau dispose d'une base de données dans laquelle des jeux de données d'abonnés sont conservés dans la structure typique du premier réseau (nom, mot de passe).

16. Procédé selon l'une des revendications 14 ou 15, dans lequel
les jeux de données d'abonnés dans la structure typique (nom, mot de passe) du premier réseau ((W-)LAN) sont associés de façon spécifique à l'abonné aux jeux de données de la structure (IMSI) du deuxième réseau (GSM, UMTS, PSTN, ISDN).

17. Procédé selon l'une des revendications 14 à 16, dans lequel
- un abonné de communication dispose d'un abonnement dans le premier réseau ((W-)LAN) et d'un abonnement dans le deuxième réseau et
- par une association, spécifique à l'abonné, des jeux de données spécifiques à l'abonné dans les deux réseaux, une facturation de services utilisés par le premier réseau ((W-)LAN) est réalisée par l'infrastructure de facturation du deuxième réseau.

18. Procédé selon l'une des revendications précédentes, dans lequel
des données pertinentes pour une authentification sont échangées entre le poste (W-H; H) du premier réseau ((W-)LAN) et un terminal d'abonné (MS, UE) d'un deuxième réseau (GSM, UMTS).

19. Procédé selon la revendication 18, dans lequel
le poste (W-H; H) transmet en tant que terminal d'abonné du premier réseau ((W-)LAN) des demandes d'authentification au terminal d'abonné (MS, UE) du deuxième réseau (GSM, UMTS) et reçoit des valeurs de données correspondantes de ce dernier.

20. Dispositif de réseau d'un premier réseau ((W-)LAN) bâti sur une première technologie, avec un ou plusieurs dispositifs de réseaux et/ou interfaces (répartiteurs, ponts, VL) qui sont configurés pour l'établissement d'une communication avec au moins un poste (W-H; H) de la première technologie, et des fonctions de base (AAA, DHCP, DNS) permettant un fonctionnement autonome du premier réseau,
**caractérisé en ce que**
- le dispositif de réseau est configuré comme dispositif d'accès (WAS; SSG) comme partie d'un deuxième réseau (GSM, UMTS) d'une deuxième technologie de telle sorte que
- le dispositif de réseau contient des fonctions logiques, spécifiques au réseau, de composants du deuxième réseau (GSM, UMTS), les fonctions logiques (VLR) spécifiques au réseau permettant une authentification et/ou une autorisation d'un poste (W-H; H) basé sur la première ou sur la deuxième technologie dans le deuxième réseau (GSM, UMTS).
